# EUROPEAN PATENT APPLICATION

(11) **EP 1 031 474 A2**
(43) Date of publication of application: **30.08.2000**
(21) Application number: 00102133.6
(22) Date of filing: 07.02.2000
(51) Int. Cl.: B60R 21/32, B60R 22/34

(54) **Safety restraint system for protecting a vehicle occupant**

(30) Priority: 26.02.1999 US 258626
(71) Applicant: Breed Automotive Technology, Inc., Lakeland, Florida 33807-3050 (US)
(72) Inventor: Hill, Timothy W., Sterling Heights, Michigan 48314 (US); Frech, Henry D., Washington, Michigan 48094 (US); Eusebi, Christopher, White Lake, Michigan 48386 (US); Miller, H. John III, Macomb County, Michigan 48044 (US)
(74) Representative: Gislon, Gabriele

(57) **Abstract**

A safety restraint system (10) for protecting a seated vehicle occupant has a load limiting retractor (102) for generating one or more levels of reaction force for permitting an associated seat belt (104) to be controllably protracted. The safety restraint system also has an airbag (208). A controller (130) controls the level of load limiting in correspondence with the degree of inflation, crash intensity, vehicle occupant size and the relative distance to the vehicle occupant.

## Description

The present invention relates to a safety restraint system for protecting a vehicle occupant as described in the preamble of claim 1.

Seat belt systems have been proposed that may, or may not, have a load limiting retractor. The load limiter permits the vehicle occupant to controllably move forward, a pretensioner or belt tightening device which eliminates slack about the vehicle occupant and a multi-level inflator to control the rate of deployment of an airbag. These systems are typically designed to protect a nominally sized vehicle occupant such as one in the 50th percentile. Currently available seat belt systems do not adjust the operating parameters of the load limiting devices, belt tighteners or inflators to provide more effective protection for vehicle occupants of different sizes and varying positions during crashes of varying severity.

The present invention provides a solution to the foregoing problems as set forth in the characterizing portion of claim 1.

### Brief Description of the Drawings

In the drawings:
FIG. 1 illustrates components of a prior art seat belt system.
FIG. 2 diagrammatically shows a multi-level load limiting seat belt retractor.
FIG. 2a shows reaction forces that are generated by a load limiting retractor.
FIG. 3 shows a driver's side airbag system.
FIG. 4 shows front passenger and rear passenger airbag systems.
FIG. 5 shows a multi-level airbag module.
FIG. 6 is a top plan view showing the location of various safety restraint components within a passenger compartment.
FIG. 7 is a flow chart of the operation of the invention.
FIGS. 8 and 9 illustrate the movement of a vehicle occupant during a crash.
FIGS. 10 and 11 illustrate various system parameters.
FIG. 12 shows a flow chart of the operation of the system.

### Detailed Description of the Invention

The accompanying FIGS. show an advanced vehicle occupant restraint system 10 comprising a seat belt system 100 and an airbag system 200 associated with each seating position, defined by an exemplary seat 20.

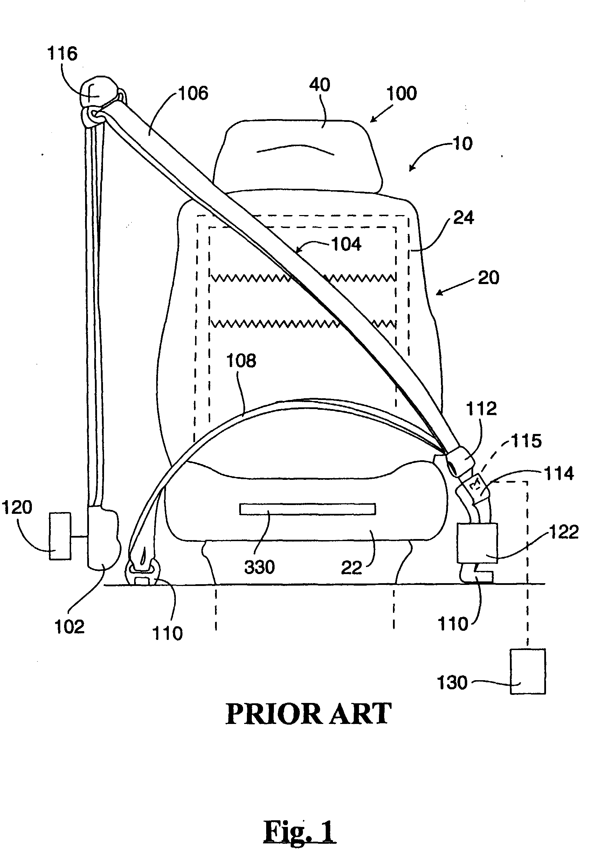

Reference is briefly made to FIG. 1, which shows the components of a prior art seat belt system 100. The seat belt system 100 comprises a retractor 102, a length of seat belt webbing 104 divided into a shoulder belt 106 and a lap belt 108. The lap belt 108 is anchored to the floor by a conventional anchor. The demarcation between the shoulder belt and lap belt is often defined by the tongue 112 which is inserted within a seat belt buckle 114 (also anchored by an appropriate anchor mechanism such as 110). The buckle or tongue may include a seat belt usage indicator 115, such as a reed switch or Hall Effect sensor, which generates a signal to a control unit 130 indicating that the seat belt has been properly secured (buckled-up) about the vehicle occupant. The shoulder belt 106 is supported by a web guide 116. As is known in the art, the seat belt system can be incorporated within the back 24 of the seat or as illustrated exterior thereto.

Also illustrated in FIG. 1 are additional components of a "smart" or advanced restraint system. These components would include one or the other of a retractor pretensioner 120 and a buckle pretensioner 122. As is known in the art, upon the sensing of a crash, the retractor pretensioner is activated to reverse wind the spool of the retractor 102, thereby eliminating slack about the vehicle occupant. When activated, the buckle pretensioner, such as 122 pulls the buckle downwardly similarly removing belt slack about the vehicle occupant. Upon sensing a crash a pretensioner (120 or 122) is activated tightening the shoulder belt 106 and/or lap belt 108 about the vehicle occupant to prevent the vehicle occupant from moving off of the seat 20. Retractors 102, which may include the conventional type of retractor in which the seat belt 104 is wound about a spool, have the spool placed in a locked configuration by the operation of a vehicle or web sensor which moves a locking member (such as a lock pawl) into engagement with a lock wheel. There is also an energy absorbing type of seat belt retractor as disclosed in US 5 626 306, US 5 785 269 and US 5 799 893. With energy absorbing seat belt retractors the vehicle occupant is permitted to move forward in a controlled manner based upon the energy dissipation or load limiting characteristics of the retractor 102. Similarly, the forward motion of the vehicle occupant can be controlled by incorporating an energy absorbing mechanism in either the buckle pretensioner 122 or the retractor pretensioner 120 which also permits the vehicle occupant to also move forward during a crash.

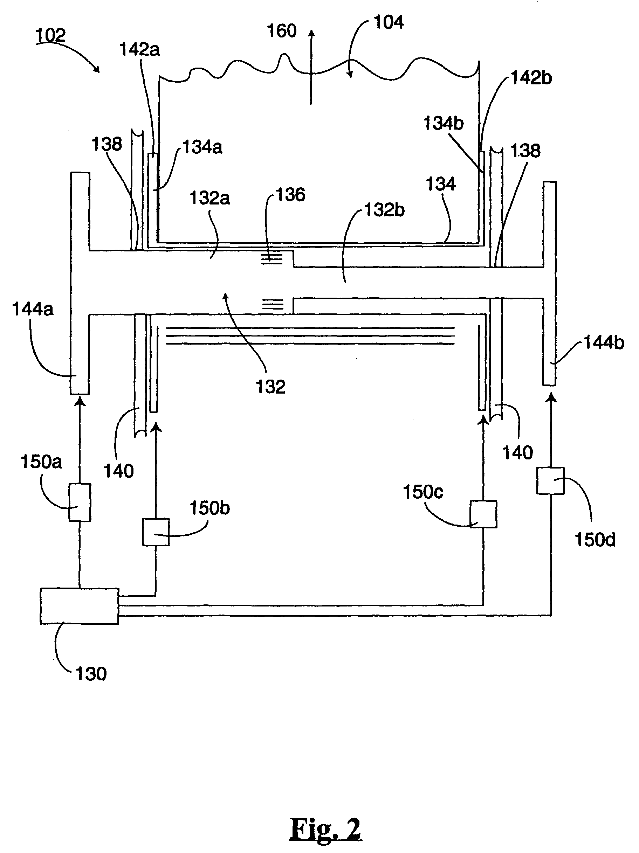

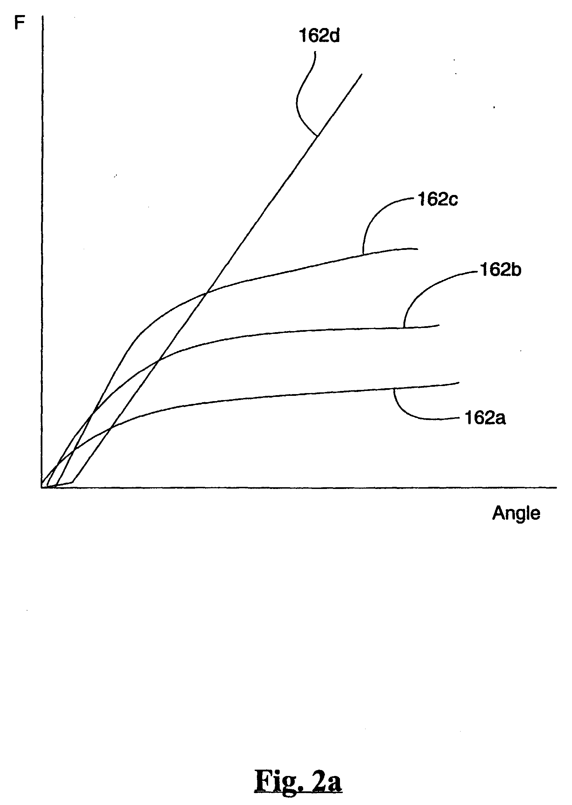

FIG. 2 diagrammatically illustrates a multi-level load limiting or energy absorbing retractor. The illustrated retractor 102 can achieve four levels of load limitation. It is not necessary to use a retractor with so many levels of load limiting in the present invention. It is well known in the art that torsion bars or crush bushings can be utilized to affect load limiting or energy dissipation/absorption retractors. FIG. 2 includes a torsion bar 132 that also acts as an axle for a spool 134. The torsion bar and spool are connected by splines 136 so that the spool and torsion bar are capable of rotating together. In the embodiment illustrated, the torsion bar 132 is divided into a larger diameter 132a and smaller diameter 132b portion. This construction enables at least two levels of load limiting capacity. As is illustrated, the torsion bar is received through openings such as 138 within a frame 140. These openings act as bushings. The spool 134 is fabricated with flanges 134a, 134b. These flanges may include on their circular periphery a lock wheel 142a, 142b respectively with lock teeth. Alternatively, separate lock wheels can be attached adjacent to the flanges 134a, 134b. A length of seat belt webbing 104 is wound about the spool and secured thereto in a conventional manner. Fixedly secured to either end of the torsion bar is another set of lock wheels represented by numerals 144a, 144b. These additional lock wheels may also be positioned interior or exterior of the frame 140.

The retractor 102 further includes a plurality of actuators 150a-150d. As is known in the art, the purpose of seat belt actuators is, during an emergency, to lock or initiate the locking of the seat belt spool. As illustrated in FIG. 2, the actuators 150a-150d are solenoid actuated pawl devices which, when activated, engage and lock with the appropriate lock wheel 142a, 142b, 144a and/or 144b. As can be recognized by one skilled in the art, some of the electronically actuating devices 150a-d can selectively be replaced by the more conventional mechanical inertia sensors. A typical seat belt retractor includes one or more inertial web sensors and one or more inertial vehicle sensors. The web sensor is activated upon sensing the webbing or seat belt 104 being protracted at a high rate from the spool. The vehicle sensor, that is another inertial sensor, is activated upon sensing that the vehicle acceleration (or deceleration) has exceeded a determinable threshold.

With lock wheel 144b, associated with the narrow diameter portion 132b of the torsion bar 132, activated and a load in the direction of arrow 160 applied to the seat belt webbing, the spool 134 will rotate and the belt permitted to protract in a controlled manner. The belt protraction will be resisted by a torsional force developed as the torsion bar 132 is twisted. Similarly, a higher level of restraining force can be achieved by actuating actuator 150a which in turn prevents lock wheel 144a from rotating but lets the spool rotate in opposition to this higher level reaction force. This low level and high level reaction force is shown is FIG. 2a by numerals 162a, 162b. If the vehicle is involved in a significantly severe crash, the controller 130 may generate activation signals to activate both actuators 150a, 150b. When the spool is rotated in response to the applied force 160, the reactive force generated by the two torsion bar segments 132a, 132b, acting in concert generates a higher level reaction force as indicated by numeral 162c.

As mentioned above, the retractor 102 is also fitted with an additional set of lock wheels 142a, 142b that may be locked by activation of one or more of the actuators 150b and/or 150c. Upon activation of one or the other of the actuators 150b or 150c the spool 134, rather than the torsion bar 132, is locked from rotation. In this case, any movement of the vehicle occupant will is based upon the film spool effect of the webbing wound about the spool and the rate of elongation of the spool as it is stressed. The reactive force generated in this situation is noted by numeral 162d (of FIG. 2a).

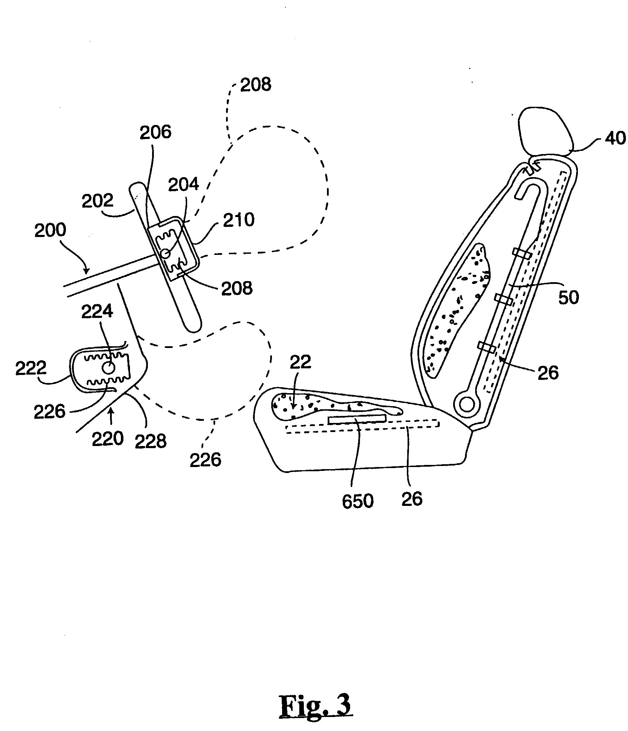

Reference is now made to FIG. 3 which illustrates a sectional view of the passenger compartment of the vehicle and shows a basic airbag system 200 installed within a steering wheel 202 and includes an inflator 204, housing 206, airbag 208 and deployment cover 210 all of which are known in the art. The system 200 may also include a knee protection system 220 also of known variety including a housing 222, inflator 224, airbag 226 and deployable cover 228. Upon deployment of airbag 208 it is positioned in front of the vehicle occupant to protect the upper torso and head. The airbag 226 prevents the vehicle occupant from submarining and when deployed pushes rearward on the knees or lower legs of the vehicle occupant. The time at which the airbags 208, 226 are deployed is dependent on the control algorithm used.

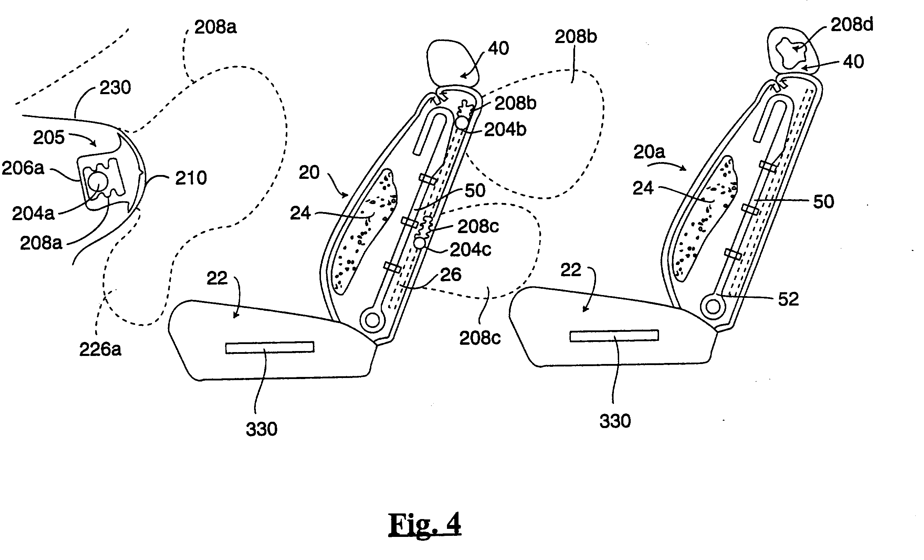

Reference is now made to FIG. 4 that illustrates the front passenger seat 20 and one of the rear seats 20a of a typical vehicle. Here the front seat passenger (not shown) will be protected by an airbag emanating from an airbag module 205 comprising an inflator 204a, housing 206a, airbag 208a and deployment cover 210a, all of which are known in the art. As can be seen the module 205 is located within a portion of an instrument panel 230. The cover 210a will often close an opening (through which the airbag deploys) in the instrument panel 230. A separate knee protection system such as 220 can also be incorporated herein but for the purpose of generality the airbag 208a is shown with an inflatable appendage or knee portion 226a which serves to protect the legs of the vehicle occupant.

The construction of the rear seat 20a is substantially the same as the front seat 20. FIG. 4 shows an optional feature of the present invention in that the rear or back 24 of the front seat 20 further includes an airbag 208b to protect the head and chest of a vehicle occupant seated in the rear seat 20a, supported on a seat frame 26. This airbag, shown in both a pre-deployment, folded condition and a deployed condition, is inflated by an additional inflator 204b. Similarly the front seat 20 may include a knee protection system. This knee protection system can include a separate inflator 204c and airbag 208c (similar to that shown in FIG. 1) or the airbag 208b can be fabricated with the integral knee portion 226a as discussed above. There are many other frontal and knee protection combinations which can be used. Various other modes of vehicle occupant protection can be used such as including in the seat an airbag 208d in the headrest 40.

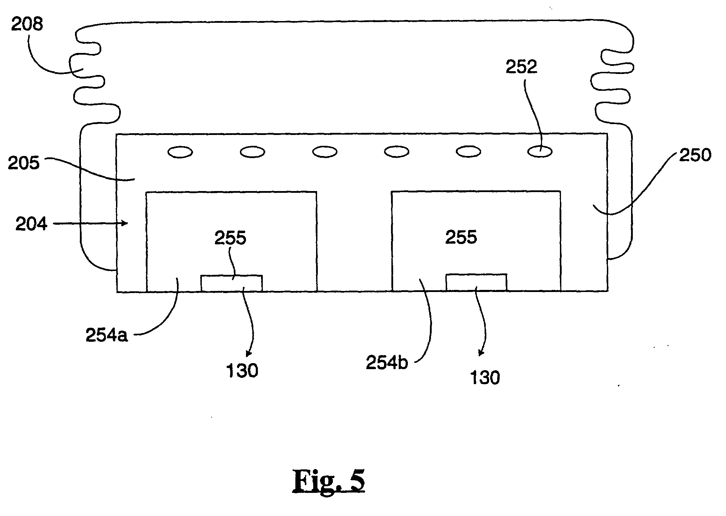

FIG. 5 diagrammatically illustrates a multi-level airbag inflator that may be used to deploy any of the airbags utilized in the system 10. The inflator such as 204 comprises a housing 205. The airbag such as 208 is mounted in close proximity to the inflator 204 so as to receive inflation gas provided or generated by the inflator 202. In the illustrated embodiment, the inflator 204 includes two different quantities of propellant 254a, 254b which, when activated, cause the inflator to generate gas at one or more determinable rates thereby achieving a variable rate of fill of the airbag. As is known in the art, these quantities of propellant can be directly actuated or actuated by a squib or initiator 255. The squib receives a control signal from, for example, the control unit 130. The inflator illustrated in FIG. 5 can generate inflation gas at three different rates, that is, the lowest rate with the smaller quantity of propellant 254b activated, a middle level rate when the larger quantity of propellant 254a activated and a third or higher level requiring both of the propellants 254a, 254b to burn relatively simultaneously.

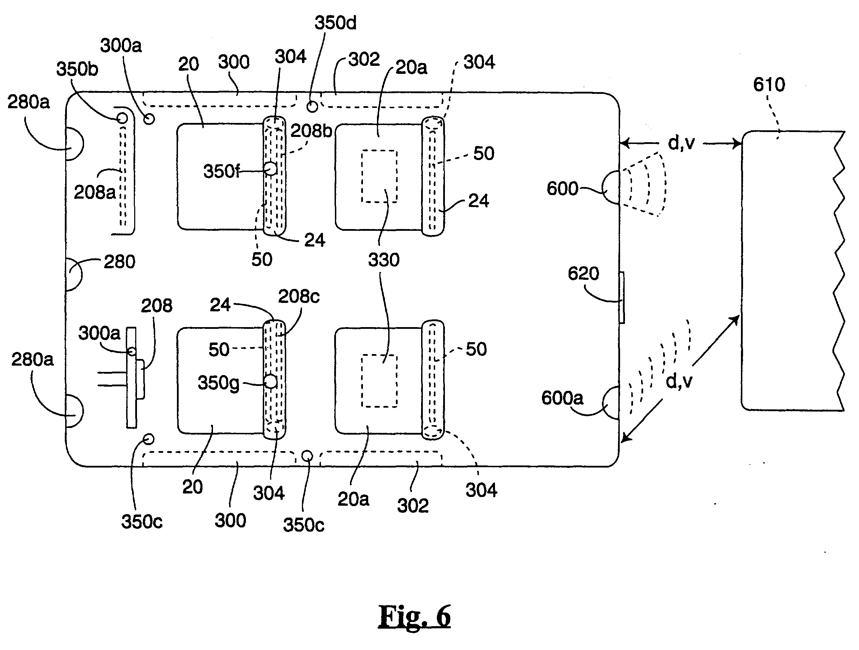

FIG. 6 is a top view of a typical vehicle compartment showing the two front seats 20 and two rear seating positions 20a. The locations of the various airbags are also illustrated. Any corresponding knee or headrest protection airbag is not shown. The vehicle may also be equipped with one or more right or left-hand side curtain airbags 300, 302 positioned on either side of the vehicle. These side curtain airbags are typically installed proximate the roof rail of the vehicle. Upon deployment the curtain airbag deploys downward and lies across the windows (and B or C pillar) of the vehicle to provide protection for the shoulder and head of the vehicle occupant. As can be appreciated, one long side curtain airbag can replace the illustrated, separate airbags. Also diagrammatically illustrated is the location of a seat-integrated side impact system 304, which, at a minimum, would include an inflator and airbag. These side impact protection airbags can also be located in the vehicle's doors (not shown). A plurality of position sensors 350 a-g are shown positioned throughout the passenger compartment for measuring the position of a selected vehicle occupant from the location of the sensor.

Typically sensors 350a-g will be positioned close to the deployment door of an associated airbag 208, 208a, etc. These sensors can also be located elsewhere in the vehicle. Crash sensors 280 such as a crush sensor or accelerometer are mounted on the vehicle to sense a frontal impact. These sensors will generate information indicative of the level of vehicle deceleration (i.e. the severity of the crash). The system 10 may also include one or more predictive sensors 280a, such a radar or sonar devices which are capable of identifying a roadway obstacle apart from the vehicle and, in association with the control unit, predicting an impending crash with the obstacle such as another vehicle or stationary object such as a pole, tree, etc. Further, each seat 20, 20a may be equipped with a weight sensor 330 to sense the size of the vehicle occupant in the seat cushion 22.

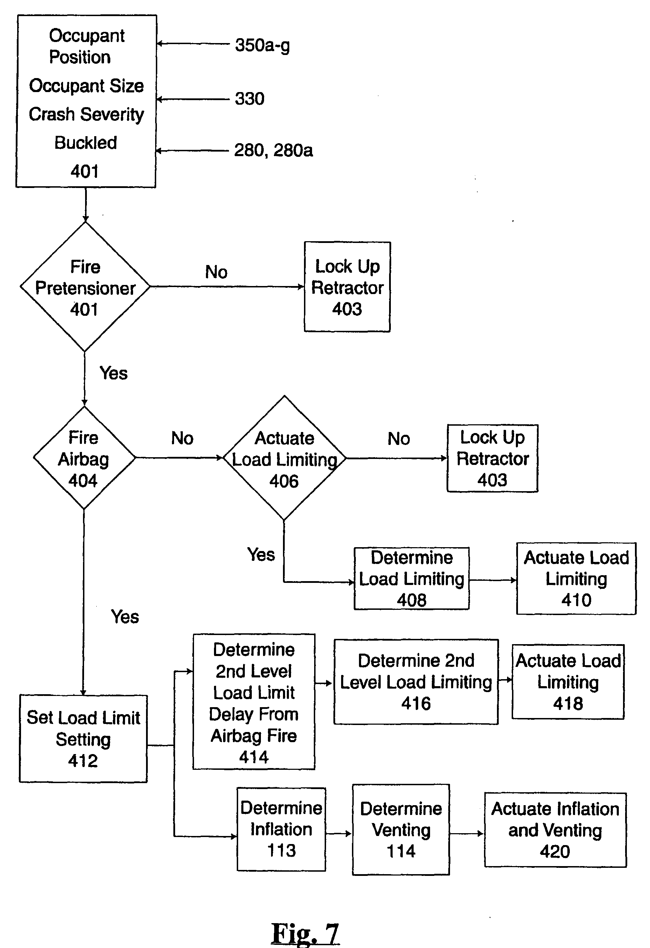

The operation of the present invention is described in conjunction with FIGS. 7-11. In the event of a modest level crash the pretensioner 120 or 122 will be activated to remove belt slack. In the event of a higher level crash the load limiting retractor features will be activated. Further, in a more severe crash one of the airbags 208, 208a, etc., will be activated and/or the retractor 102 will initially be placed in a load limiting mode of operation chosen in correspondence with, for example, the vehicle occupant's distance from the airbag. The load-limiting mode is entered by activating, for example, one or both actuators 150a, 150b. As will be seen from the description below, based upon other operational parameters such as vehicle occupant weight, vehicle occupant position and crash severity, the level of load limiting will be changed appropriately. With the retractor 102 in its chosen energy absorbing mode of operation, the vehicle occupant-generated forces on the seat belt 104 will cause the torsion bar(s) to twist and yield the controlled protraction of the spool 134. Consequently, the vehicle occupant will be temporarily restricted from moving forward toward the deploying airbag and as such a maximum distance is initially maintained between the vehicle occupant and the deploying airbag. Thereafter, as the crash continues and the airbag deploys, the load limiting characteristics of the retractor can be varied, thereby permitting the controlled protraction of the seat belt webbing 104 thereby letting the vehicle occupant move toward the deflating airbag to "ride down the airbag."

FIG. 7 outlines in greater detail a method of operating the present invention. Block 401 is representative of the control unit 130 receiving input signals identifying vehicle occupant position, vehicle occupant size, crash severity and buckle usage from the above-mentioned sensors. After a determination has been made that a crash has occurred above a defined first level, the control unit causes the pretensioner or belt tightener 102 or 122 associated with the seated vehicle occupant to be activated (block 402). If the crash level is below the first level, the pretensioner will not be activated and the vehicle occupant will be protected solely by the characteristics of the seat belt retractor 102 (block 403). In this case, the control unit 130 will prohibit any load limiting of the retractor and activate one or mare of the actuators 150b and/or c to merely halt the protraction of the spool. Any forward motion of the vehicle occupant will be defined by the phenomenon of the film spool-out and the elastic characteristics of the seat belt webbing and in particular the shoulder belt 106 and lap belt 108. If the crash is relatively low, the spool will not be locked. If the crash is determined to be at an increased level of severity to activate a pretensioner (block 402) the control unit 130 must decide whether the crash is of a level sufficient to deploy one or more of the airbags 208 (block 404). If, however, the crash is not sufficiently severe to cause the airbags to be deployed, a determination must be made as to whether or not the retractor 104 must be switched to one of its load limiting modes operation (block 406). If the crash parameters and input data do not warrant the load limiting operation of the retractor, then the retractor mode of operation remains as mentioned above. As can be seen, block 403 is repeated for the purpose of illustration.

If load limiting is required, that is the level of the crash is sufficient to warrant the vehicle occupant to be able to move forward in a controlled manner (primarily to result in a decreased head and chest acceleration and the potential of injury), the control unit 130 must determine which level of load limiting is needed, corresponding to graphs 156a, b, or c, under the circumstances (block 408). Thereafter, one or more of the actuators 150a, 150d are activated (block 410). The determination made in block 404 to deploy the airbag is based upon vehicle occupant position, size, crash severity, etc. For those inflators that are multi-level inflators, the control unit 130 (also in block 404) determines which discrete level of inflation is appropriate for the crash severity, vehicle occupant size and vehicle occupant position. For example, it may be determined that in some situations, because of the vehicle occupant's proximity to the airbag, the use of a child seat, a small vehicle occupant, etc., that the airbag will not be deployed or, alternatively, the airbag will be deployed at a low, moderate or high level depending upon whether or not the vehicle occupant is seated properly or is in what is known as an out-of-position position.

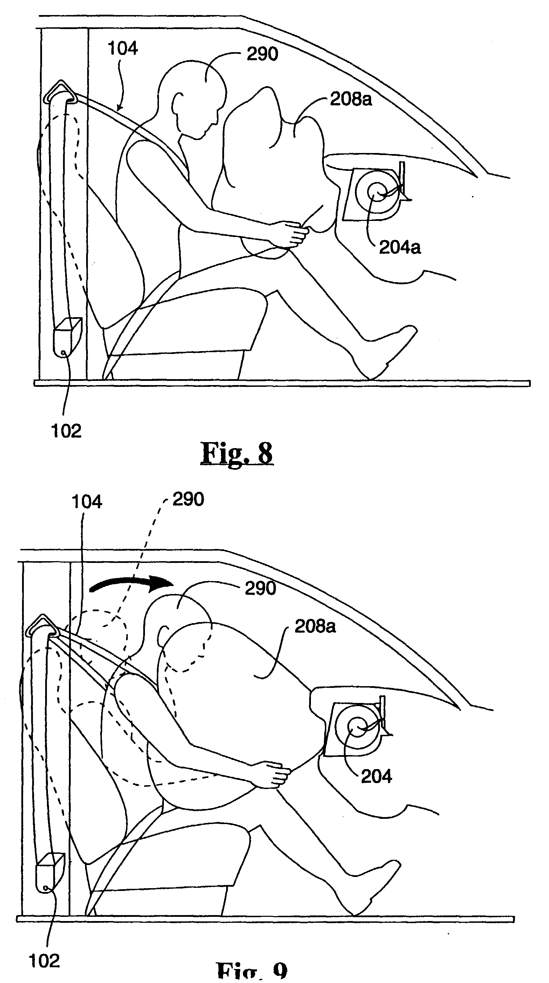

If the decision has been made (block 404) to deploy the airbag, then as mentioned above, the control unit 130 will place the seat belt retractor 102 in its load limiting mode of operation (block 412). As can be appreciated, at this point the pretensioner (belt 122 or retractor 120) has been activated thereby eliminating seat belt slack about the vehicle occupant and basically holding the vehicle occupant in the seat. Thereafter, the vehicle occupant's belted trajectory will be determined based upon the load-limiting mode of the operation of the retractor 102. Reference is very briefly made to FIG. 8 which illustrates the vehicle occupant 290 being restrained by the seat belt system with an airbag such as 208a (a front passenger airbag) being deployed. FIG. 9 illustrates the airbag deployed in a state of full inflation.

It is desirable to permit the vehicle occupant 290 to move forward (see phantom lines in FIG. 9) in a controlled manner after initial contact with the airbag 208a so that the vehicle occupant remains in contact with the airbag as it deflates, at least for a period of time. This continued contact, as mentioned, is referred to as "ride down." In order to affect this ride down, it is appropriate that the load limiting characteristics of the retractor 102 be lessened such that less belt force is needed to controllably protract the seat belt 104 from the spool of the retractor.

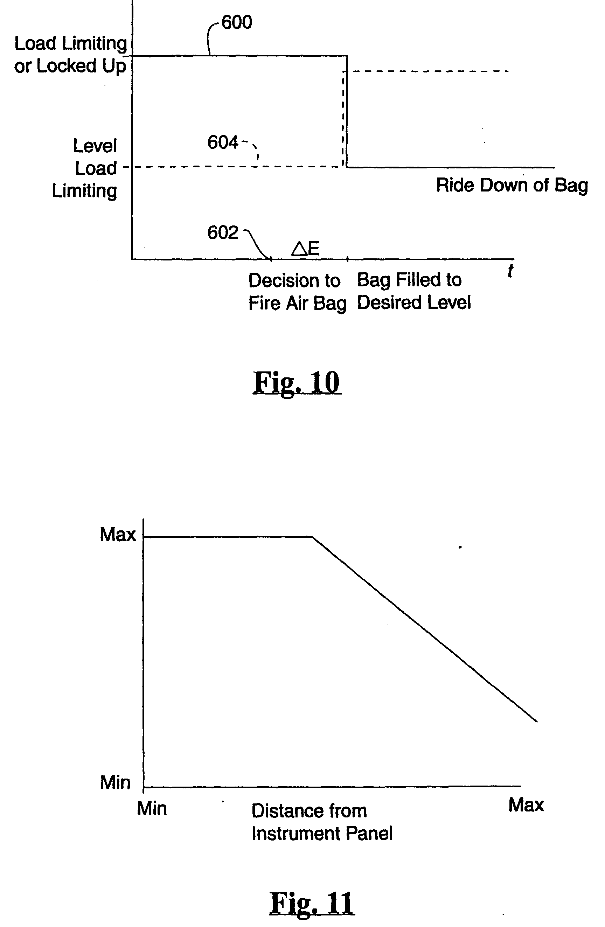

Reference is briefly made to FIG. 10 that illustrates a time line showing the multi-mode operation of the present invention. Diagrammatically illustrated is the initial operation of the system in which the retractor is placed in a high load limiting or locked-up mode of operation (see numeral 600). Thereafter, the decision to deploy (see numeral 602) the airbag is made and the airbag is inflated to a desired level that will occur at a time period of Δt from the initiation of airbag inflation. Δt can be found empirically from experimentation or derived from a pressure sensor that is used to measured airbag pressure. After this period of time Δt, the mode of operation of the seat belt 102 is changed to a lower level of load limiting, depending upon the vehicle occupant and crash parameters to permit the vehicle occupant to move forward and ride down as the airbag deflates. As mentioned, under certain situations it may be desirable to first place the retractor 102 in a lower mode of load limiting and then (after the time Δt, increase the level of load limiting, see phantom line 604). FIG. 11 is a graph showing the variation of the control parameter Δt as a function of the distance of the vehicle occupant from a forward obstruction such as the instrument panel. It should be appreciated that a similar graph would be generated, based on empirical data, to identify a corresponding Δt based upon the distance to a steering wheel for protecting the driver or the distance from a rear vehicle occupant to the rear of the front seat, etc.

Reference is again made to FIG. 7. Based upon crash parameters, the vehicle occupant's size and distance from the forward obstruction, the appropriate time delay Δt is determined (block 414) and a determination is made as to which reduced (or higher) load limit level mode of operation is appropriate for the particular situation (block 416). Thereafter, the retractor 102 is placed into such lessened (or higher) load limiting mode of operation (block 418) by activating or deactivating one or other of the actuators 150a and 150d.

While not illustrated, in the system described above, one of the housing such as 206 or 206a may include a means for rapidly deflating the airbag. The typical construction of an airbag permits the inflation gas to escape through the pores of the woven material, or alternatively, the airbag is provided with discrete vents which are either open all the time or operate as a one-way check valve and are opened when the internal bag pressure reaches a predetermined value. Alternatively, one or more of the airbag housings may include discrete and controllable vents which are opened and/or closed based upon the desired airbag deflation characteristics. If the system includes such controllable vents (block 420) these vents can more rapidly deflate the airbag.

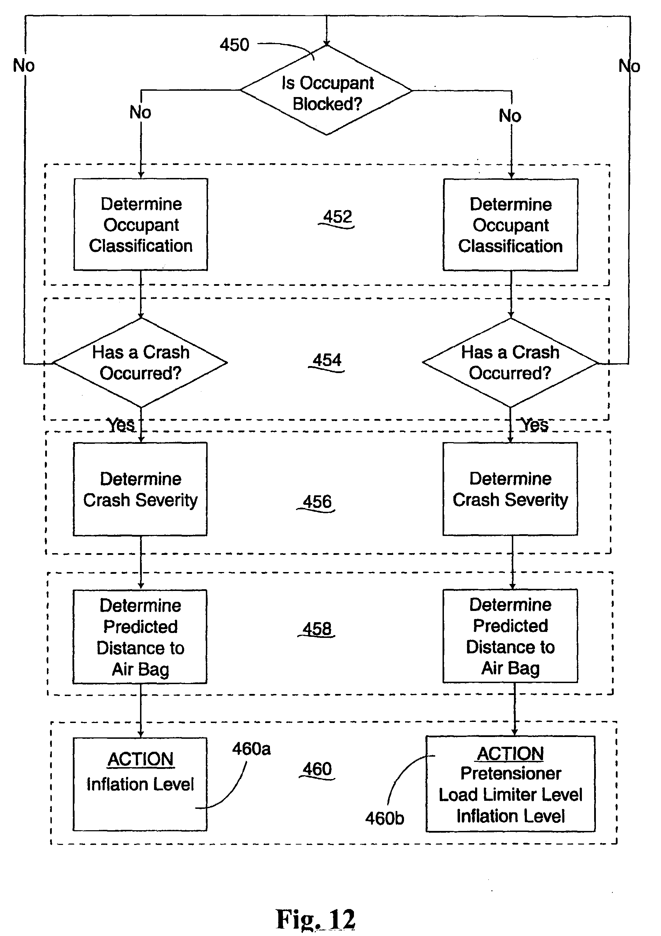

Reference is made to FIG. 12 which offers a further refinement of the operation of the present invention. When the ignition switch of the vehicle is activated, the various sensor inputs are processed by the control unit 130. The system 10 needs to know whether or not the vehicle occupant is using the seat belt system and interrogates the seat belt usage sensor 115 (block 450). Regardless of whether the vehicle occupant is belted or not, the system monitors one or more of the various position sensors 350a-g to determine vehicle occupant position (blocks 452). Thereafter the determination is made as to whether or not a crash has occurred (block 452). If a crash has not occurred, obviously no further activity is warranted. Thereafter, the control unit, based upon crash sensor input, determines the crash severity (black 456). During the crash event, the distance between the vehicle occupant and the airbag location (sensor location) is determined on an ongoing basis (block 458). The block 460 represents further activity of the control system 10. As can be seen for the unbelted vehicle occupant, the only control, post-crash activity relates to the activation of the airbag (block 460a). For the vehicle occupant buckled by the seat belt, various safety components such as the retractor, pretensioner, etc. are activated.

The operation of the present system is subdivided into five major categories, each of which is subdivided into a buckled and unbuckled mode of sub-operation, that is, whether or not the seat belt has been properly secured about the vehicle occupant, child seat, etc. These major categories or subdivisions of operation relate to 1) the rear-facing child seat, 2) a child having a weight of less than 30Kg, a pre-teen, teen, or small adult having a weight of between 30 - 54.5 Kg (66 and 120 pounds), a mid-sized adult of weight 54.5 - 90.8 Kg (120 - 200 pounds) and a larger sized vehicle occupant greater than 90.8Kg (200 pounds). As mentioned above, each of the above categories 1-5 is broken into two sub-categories. Reference is made to Tables 1a, 1b - 5a, and 5b which summarize the operation of the present invention for each of the various categories. The tables are believed to be self-explanatory. Table 1a, for example, shows the operation of the system performance for a rear-facing child seat that has been properly secured or buckled by a seat belt to the passenger seat. If the control unit 130 determines, for example, that the child seat is between 0 and 350 mm from the airbag location and the vehicle is involved in a relatively low level crash, such as between 0 - 28kph, the seat belt retractor 102 will initially be placed in a high load limit mode of operation, the pretensioner is not activated, nor will the corresponding airbag be activated. However, in the case of an extreme crash where the change in velocity is greater than 38.4 kph (24 mph), and where the child seat is positioned greater than for example 400 mm from the airbag, the retractor will be maintained in a high load limit, the pretensioner will be tightened to remove slack about the seat belt, but the airbag will not be deployed. Table 1a shows the corresponding change in activation for the unbuckled (or improperly installed) rear-facing child seat.

Reference is made to any of the tables 1a-5a which represent one of the five unbuckled modes of operation. As can be seen, and as mentioned above, only the airbag is activated. As can be seen the airbag is activated at a high or lower stage of operation or not deployed at all. Finally, reference is made to Table 5a. As an example, assuming that the vehicle crash can be represented by, for example, a change in velocity between 28.8 - 38.4 kph (18-24 mph) with the vehicle occupant moderately spaced from the location of the airbag, such as between 100-200 mm, the pretensioner will be activated, the load limiting retractor placed in a high load limit mode of operation and the airbag deployed at an aggressive or high rate of deployment. Thereafter, as illustrated in for example FIG. 7, the mode of operation of the load-limiting retractor may be reduced based upon the predetermined time delay Δt in relationship to the movement of the vehicle occupant toward the deploying airbag.

**Table 1a**

| Buckled Rear Facing Child Seat | | | |
|---|---|---|---|
| | | | |

| | Delta Velocity | | |
|---|---|---|---|
| Predicted Distance to Instrument Panel | 0-28 kph | 28.8-38.4 kph | >38.4 kph |
| | | | |
| | Do Not Activate PT | PT | PT |
| 0-350 mm | Load Limit High | Load Limit High | Load Limit High |
| | Do Not Deploy Airbag | Do Not Deploy Airbag | Do Not Deploy Airbag |
| | | | |
| | Do Not Activate PT | PT | PT |
| 350-400 mm | Load Limit High | Load Limit High | Load Limit High |
| | Do Not Deploy Airbag | Do Not Deploy Airbag | Do Not Deploy Airbag |
| | | | |
| | Do Not Activate PT | PT | PT |
| >400 mm | Load Limit High | Load Limit High | Load Limit High |
| | Do Not Deploy Airbag | Do Not Deploy Airbag | Do Not Deploy Airbag |

**Table 1b**

| Unbuckled Rear Facing Child Seat | | | |
|---|---|---|---|
| | | | |

| | Delta Velocity | | |
|---|---|---|---|
| Predicted Distance to Instrument Panel | 0-28 kph | 28.8-38.4 kph | >38.4 kph |
| | | | |
| 0-350 mm | Do Not Deploy Airbag | Do Not Deploy Airbag | Do Not Deploy Airbag |
| | | | |
| 350-400 mm | Do Not Deploy Airbag | Do Not Deploy Airbag | Do Not Deploy Airbag |
| | | | |
| >400 mm | Do Not Deploy Airbag | Do Not Deploy Airbag | Do Not Deploy Airbag |

**Table 2a**

| Properly Buckled Child ≤ 30kg | | | |
|---|---|---|---|
| | | | |

| | Delta Velocity | | |
|---|---|---|---|
| Predicted Distance to Instrument Panel | 0-28 kph | 28.8-38.4 kph | >38.4 kph |
| | | | |
| | Do Not Activate PT | PT | PT |
| 0-350 mm | Load Limit High | Load Limit High | Load Limit High |
| | Do Not Deploy Airbag | Do Not Deploy Airbag | Do Not Deploy Airbag |
| | | | |
| | Do Not Activate PT | PT | PT |
| 350-400 mm | Load Limit High | Load Limit Low | Load Limit Low |
| | Do Not Deploy Airbag | Do Not Deploy Airbag | Low Stage Airbag Deployment |
| | | | |
| | Do Not Activate PT | PT | PT |
| >400 mm | Load Limit High | Load Limit Low | Load Limit Low |
| | Do Not Deploy Airbag | Do Not Deploy Airbag | Low Stage Airbag Deployment |

**Table 2b**

| Unbelted Child ≤ 30kg | | | |
|---|---|---|---|
| | | | |

| | Delta Velocity | | |
|---|---|---|---|
| Predicted Distance to Instrument Panel | 0-28 kph | 28.8-38.4 kph | >38.4 kph |
| | | | |
| 0-350 mm | Do Not Deploy Airbag | Do Not Deploy Airbag | Low Stage Airbag Deployment |
| | | | |
| 350-400 mm | Do Not Deploy Airbag | Low Stage Airbag Deployment | Low Stage Airbag Deployment |
| | | | |
| >400 mm | Do Not Deploy Airbag | Low Stage Airbag Deployment | Low Stage Airbag Deployment |

**Table 3a**

| Properly Buckled Vehicle occupant 30-54.5 kg | | | |
|---|---|---|---|
| | | | |

| | Delta Velocity | | |
|---|---|---|---|
| Predicted Distance to Instrument Panel | 0-28 kph | 28.8-38.4 kph | >38.4 kph |
| | | | |
| | Do Not Activate PT | PT | PT |
| 0-100 mm | Load Limit High | Load Limit High | Load Limit High |
| | Do Not Deploy Airbag | Do Not Deploy Airbag | Low Stage Airbag Deployment |
| | | | |
| | Do Not Activate PT | PT | PT |
| 100-200 mm | Load Limit High | Load Limit Medium | Load Limit Medium |
| | Do Not Deploy Airbag | Low Stage Airbag Deployment | Low Stage Airbag Deployment |
| | | | |
| | Do Not Activate PT | PT | PT |
| >200 mm | Load Limit High | Load Limit Low | Load Limit Low |
| | Do Not Deploy Airbag | Low Stage Airbag Deployment | High Stage Airbag Deployment |

**Table 3b**

| Unbelted Vehicle occupant 30-54.5 kg | | | |
|---|---|---|---|
| | | | |

| | Delta Velocity | | |
|---|---|---|---|
| Predicted Distance to Instrument Panel | 0-28 kph | 28.8-38.4 kph | >38.4 kph |
| | | | |
| 0-100 mm | Do Not Deploy Airbag | Do Not Deploy Airbag | Low Stage Airbag Deployment |
| | | | |
| 100-200 mm | Do Not Deploy Airbag | Low Stage Airbag Deployment | High Stage Airbag Deployment |
| | | | |
| >200 mm | Do Not Deploy Airbag | High Stage Airbag Deployment | High Stage Airbag Deployment |

**Table 4a**

| **Properly Buckled Vehicle occupant** 54.5-90.8 Kg | | | |
|---|---|---|---|
| | | | |

| | Delta Velocity | | |
|---|---|---|---|
| Predicted Distance to Instrument Panel | 0-28 kph | 28.8-38.4 kph | >38.4 kph |
| | | | |
| | Do Not Activate PT | PT | PT |
| 0-100 mm | Load Limit High | Load Limit High | Load Limit High |
| | Do Not Deploy Airbag | Low Stage Airbag Deployment | Low Stage Airbag Deployment |
| | | | |
| | Do Not Activate PT | PT | PT |
| 100-200 mm | Load Limit High | Load Limit Medium | Load Limit High |
| | Do Not Deploy Airbag | High Stage Airbag Deployment | High Stage Airbag Deployment |
| | | | |
| | Do Not Activate PT | PT | PT |
| >200 mm | Load Limit High | Load Limit Medium | Load Limit Medium |
| | Do Not Deploy Airbag | High Stage Airbag Deployment | High Stage Airbag Deployment |

**Table 4b**

| Unbelted Vehicle occupant 54.5-90.8 Kg | | | |
|---|---|---|---|
| | | | |

| | Delta Velocity | | |
|---|---|---|---|
| Predicted Distance to Instrument Panel | 0-28 kph | 28.8-38.4 kph | >38.4 kph |
| | | | |
| 0-100 mm | Do Not Deploy Airbag | Low Stage Airbag Deployment | Low Stage Airbag Deployment |
| | | | |
| 100-200 mm | Do Not Deploy Airbag | Low Stage Airbag Deployment | High Stage Airbag Deployment |
| | | | |
| >200 Mm | Do Not Deploy Airbag | High Stage Airbag Deployment | High Stage Airbag Deployment |

**Table 5a**

| Properly Buckled Vehicle occupant > 90.8 Kg | | | |
|---|---|---|---|
| | | | |

| | Delta Velocity | | |
|---|---|---|---|
| Predicted Distance to Instrument Panel | 0-28 kph | 28.8-38.4 kph | >38.4 kph |
| | Do Not Activate PT | PT | PT |
| 0-100 Mm | Load Limit High | Load Limit High | Load Limit High |
| | Do Not Deploy Airbag | Low Stage Airbag Deployment | Low Stage Airbag Deployment |
| | | | |
| | Do Not Activate PT | PT | PT |
| 100-200 Mm | Load Limit High | Load Limit High | Load Limit High |
| | Do Not Deploy Airbag | Low Stage Airbag Deployment | High Stage Airbag Deployment |
| | | | |
| | Do Not Activate PT | PT | PT |
| >200 Mm | Load Limit High | Load Limit Medium | Load Limit High |
| | Do Not Deploy Airbag | High Stage Airbag Deployment | High Stage Airbag Deployment |

**Table 5B**

| Unbelted Vehicle occupant > 90.8 Kg | | | |
|---|---|---|---|
| | | | |

| | Delta Velocity | | |
|---|---|---|---|
| Predicted Distance to Instrument Panel | 0-28 kph | 28.8-38.4 kph | >38.4 kph |
| | | | |
| 0-100 Mm | Do Not Deploy Airbag | Low Stage Airbag Deployment | Low Stage Airbag Deployment |
| | | | |
| 100-200 Mm | Do Not Deploy Airbag | High Stage Airbag Deployment | High Stage Airbag Deployment |
| | | | |
| >200 Mm | Do Not Deploy Airbag | High Stage Airbag Deployment | High Stage Airbag Deployment |

## Claims

1. A safety restraint system (10) for protecting a vehicle occupant comprising:
a pretensioner for tightening a seat belt by removing belt slack;
an airbag (208);
a sensor for collecting data; characterized by
a load limiting retractor (102) capable for generating one or more levels of reaction force for permitting an associated seat belt to be controllably protracted, the retractor when in such a load limiting mode is first placed in a high load limiting mode of operation; and
a control unit for processing data from the sensor and signaling an actuator of a safety component.

2. A safety restraint system (10) for protecting a vehicle occupant according to claim 1 characterized by further comprising a position sensor (350 a-g) which senses the position of the vehicle occupant and sends a signal to the control unit.

3. A safety restraint system (10) for protecting a vehicle occupant according to claim 1 or 2 characterized by further comprising a crash sensor (280) which senses the vehicle deceleration and sends a signal to the control unit.

4. A safety restraint system (10) for protecting a vehicle occupant according to any of the preceding claims characterized by further comprising a weight sensor (330) which senses the occupant's weight and sends a signal to the control unit.

5. A safety restraint system (10) for protecting a vehicle occupant according to any of the preceding claims characterized by further comprising a seat belt usage indicator (115) which senses whether a seat belt tongue (112) is inserted into a seat belt buckle (114) and sends a signal to the control unit.

6. A safety restraint system (10) for protecting a vehicle occupant according to any of the preceding claims characterized in that the control unit processes data from sensors, determines the necessity of actuating a safety component, and sends appropriate signals to the safety component.

7. A safety restraint system (10) for protecting a vehicle occupant according to any of the preceding claims characterized in that the airbag (208a)is inflated to a specified volume by a multi-level inflator (224).

8. A safety restraint system (10) for protecting a vehicle occupant according to any of the preceding claims characterized in that a lock wheel (142a) of said load limiting retractor (102) can be locked to prevent protraction of the seat belt.

9. A safety restraint system (10) for protecting a vehicle occupant according to any of the preceding claims characterized in that a load limiting means allows a controlled forward movement of the vehicle occupant after the crash

10. A safety restraint system (10) for protecting a vehicle occupant according to claim 9 characterized in that the load limiting means prohibits forward movement of the vehicle occupant until contact is achieved between said vehicle occupant and said airbag (208a).
